(19) Europäisches Patentamt
European Patent Office
Office européen des brevets

(11) **EP 3 133 142 A1**

(12) **EUROPEAN PATENT APPLICATION**

(43) Date of publication:
**22.02.2017 Bulletin 2017/08**

(51) Int Cl.:
*C10L 3/00* (2006.01)     *G05D 11/13* (2006.01)

(21) Application number: **15002445.3**

(22) Date of filing: **18.08.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Linde Aktiengesellschaft
80331 München (DE)**

(72) Inventor: **Elshaug, Rhyan
VIC, 3073 (AU)**

(74) Representative: **Zahn, Christoph
Linde AG
Patente und Marken
Dr.-Carl-von-Linde-Strasse 6-14
82049 Höllriegelskreuth (DE)**

(54) **A METHOD OF INJECTING A LIQUID INTO A GAS STREAM**

(57)    The present invention relates to a method of injecting a liquid into a gas stream, especially a gas stream of natural gas, comprising the steps of determining a minimum required liquid concentration dependent on a lower explosion limit of the gas in the gas stream (201), determining a relation between a liquid injection rate and a flowrate of the gas stream dependent on the determined minimum required liquid concentration (202), measuring an actual flowrate of the gas stream (203), determining a target liquid injection rate by use of the determined relation dependent on the measured actual flowrate (204), injecting the liquid into the gas stream according to the determined target liquid injection rate (206).

FIG. 2

EP 3 133 142 A1

**Description**

The present invention relates to a method of injecting a liquid into a gas stream and a liquid injection system adapted to inject a liquid into a gas stream, especially into a gas stream of natural gas.

Prior art

Handling of odourless and colourless gases, like natural gas, can be dangerous. Since those gases usually cannot be detected without facilities, leaks or escaping gas cannot easily be detected by an operator. Thus, if those gases are flammable or explosive, handling of the gases can implicate safety risks.

In the course of gas odourisation, an odourant, which has a characteristic smell, e.g. a distinctive and unpleasant odour, is added to the gas. Thus, leaks or escaping gas can be detected by an operator without facilities just by the smell of the odourant. The odourant can especially be added in concentrations, such that the presence of gas in air in concentrations below the lower explosive limit (LEL) is readily detectable.

The odourant is usually in its liquid phase when added to the gas. Thus, for the gas odourisation corresponding means like pumps or valves are usually needed in order to inject said liquid into the gas or gas stream. If not controlled properly, the odourant can easily be overdosed, i.e. a larger amount than needed in order to smell/detect leaking gas is added to the gas. Thus, a considerable amount of odour is unnecessarily consumed, leading to an uneconomic situation or nuisance leak detection. However, there is also the danger of underdosing. In this case, leaking gas cannot be detected any more by odour, which is a significant safety risk.

It is desirable to provide a way of effectively and precisely injecting a liquid into a gas stream, especially of injecting an odourant into a gas or gas stream, in particular an inflammable or explosive gas.

Disclosure of the invention

The invention relates to a method of injecting a liquid into a gas stream and a liquid injection system with the features of the independent claims. Further advantages and embodiments of the invention will become apparent from the description and the appended figures.

The gas is especially odourless, colourless, flammable, and/or explosive. The liquid is especially injected into the gas stream for safety reasons, in order to make the gas detectable by an operator without any facilities. Thus, leaks or escaping gas, respectively, can easily be detected. Expediently, an odourant can be injected into the gas stream as the liquid and a gas odourisation can be conducted. Especially natural gas is used as the gas.

According to the invention, a minimum required liquid concentration is determined dependent on a lower explosion limit of the gas in the gas stream. The minimum required liquid concentration especially describes a minimum amount of liquid, which shall be contained inside a predefined volume of the gas, especially in order to detect the presence of gas in air in concentrations below the lower explosive limit (LEL). The minimum required liquid concentration is especially determined in the unit of mass per volume.

Moreover, certain given specifications can be considered in order to determine the minimum required liquid concentration, e.g. specifications in order to make the gas detectable. For example, specifications according to international standards or safety regulations can be considered. For example those specifications can demand that gas in air is readily detectable in concentrations below a fraction of the lower explosive limit, for example below 20% of the lower explosive limit.

A (theoretical) relation or correlation between a liquid injection rate and a flowrate of the gas stream is determined dependent on the determined minimum required liquid concentration. The liquid injection rate characterises an amount of liquid, which shall be injected into the gas stream during a predetermined time interval. The determined relation establishes a connection between said amount of liquid per time and a specific flowrate of the gas stream. The liquid injection rate is especially given in the unit of volume per time, the flowrate especially in the unit of mass per time. The theoretical relation especially embodies a characteristic or characteristic curve according to which the liquid is injected into the gas stream.

An actual flowrate of the gas stream is measured. For this purpose, a flowmeter is provided, e.g. an orifice plate flowmeter. The gas stream can for example be transferred through gas transfer means, e.g. through a pipe, a pipeline, a hose, etc., at which the flowmeter is mounted.

A target liquid injection rate is determined by use of the determined theoretical relation dependent on the measured actual flowrate. The amount of liquid, which is to be injected into the gas stream during a predetermined time interval, is determined taking into account the determined minimum required liquid concentration and the actual flowrate of the gas stream. The liquid is injected into the gas stream according to the determined target liquid injection rate. A pump, e.g. a reciprocating pump, is adapted to inject the liquid into the gas stream.

The invention further relates to a corresponding liquid injection system adapted to inject the liquid into the gas stream. The liquid injection system comprises a flowmeter adapted to measure the actual flowrate of the gas stream, a pump adapted to inject the liquid into the gas stream, and a control unit. The control unit is preferably constructed as a programmable logic controller (PLC). The control unit is especially connected with the flowmeter and the pump and is especially adapted to control the pump. Moreover, the control unit is adapted to conduct a preferred embodiment of the method according to the invention. Advantages and embodiments of the liquid injection system and of the method of injecting a liquid into a gas stream according to the invention arise from the following description in an analogous manner.

Advantages of the invention

The invention provides a precise and effective way of injecting a liquid into a gas stream. The liquid can be injected into the gas stream with a liquid injection rate proportional to the flowrate of the gas stream. The injection is based on a correlation between flowrate of the gas stream and dosing of the liquid, i.e. the liquid injection rate. Fur this purpose, the flowmeter for measuring the flowrate and the pump for injecting the liquid are correlated or combined, respectively. Thus, it is possible to precisely determine and inject a required amount of liquid especially depending on the actual flow rate and especially according to given specifications.

It is especially possible to precisely inject comparatively small amounts of the liquid as well as comparatively large amounts. By considering the lower explosive limit in order to determine the minimum required liquid concentration, it can be ensured that the presence of the gas in air in concentrations below the lower explosive limit of the gas can easily be detected.

Conventional means to inject a liquid into a gas stream, especially an odourant in the course of gas odourisation, can usually comprise pressure bypass systems, e.g. a needle valve. These conventional means usually lack a dosing control, especially when the flowrate of the gas stream is variable. Thus, the danger of overdosing as well as underdosing arises. For example when a storage tank storing the liquid or odourant, respectively, is exposed to high temperatures and/or direct sunlight, a rapid boiling of the liquid or odourant, respectively, can occur. With the lack of a dosing control, this can cause significant overdosing of the injected liquid or odourant, respectively. Thus, considerable amounts of liquid or odourant, respectively, are misspent and the liquid or odourant, respectively, stored in the storage tank possibly does not last for a designed period of time.

By the method and system according to the invention it can especially be guaranteed that essentially the required amount of liquid or odourant, respectively, is injected into the gas stream and not a too large amount or a too small amount. Thus, overdosing and underdosing can be prevented. Accordingly, the liquid or odourant, respectively, is not unnecessarily misspent and it can be assured that no danger due to underdosing can arise. Furthermore, the dosing rate or liquid injection rate can be varied as required, e.g. the rate can be increased to "condition" a new pipeline.

The minimum required liquid concentration and the theoretical relation can for example be determined during a first phase, e.g. during a construction and/or configuration phase of the liquid injection system. During this first phase the components of the liquid injection system can especially be installed. For example, the flowmeter and the pump can be connected with gas the transfer means, through which the gas stream, into which the liquid shall be injected, is conducted. Moreover, the control unit can be programmed and/or configured. The determined required liquid concentration and/or theoretical relation can be saved in a memory of the control unit. During a second phase, e.g. an operation phase, the liquid injection system is brought into service and is being operated. During this second phase, the actual flowrate of the gas stream is measured, the target liquid injection rate is determining, and the liquid is accordingly injected into the gas stream.

Preferably, natural gas, methane, butane, propane, hydrogen and/or acetylene or mixtures thereof are used as the gas. Natural gas can for example be used as energy supply, especially in order to replace diesel, liquefied petroleum gas (LPG), pipeline gas, or biofuel. Natural gas can thus be used for power generation, e.g. in power plants, in generator assemblies, or for offshore power generation. Moreover, natural gas can especially be used for gas blending, e.g. for blending of biogas.

Advantageously, a stroke interval between liquid injection strokes is determined. The liquid is injected into the gas stream in the course of these liquid injection strokes. The stroke interval is determined dependent on the determined target liquid injection rate and on a stroke volume. This stroke volume indicates the volume of liquid, which is injected into the gas stream in the course of each liquid injection stroke. The liquid is injected into the gas stream in intervals proportional to the flowrate of the gas stream. The pump is especially accordingly adjusted to inject said volume of liquid into the gas stream in the course of each liquid injection stroke. The stroke volume will typically be in the range between 0.05 ml and 0.1 ml, preferably essentially or equal to 0.055 ml.

When being injected into the corresponding transfer means (e.g. a pipeline), through which the gas stream is conducted, the liquid especially adsorbs on the walls of the transfer means. De-adsorption especially occurs according to sorption isotherms, particularly to the Langmuir isotherm according to the Langmuir adsorption model. Subsequently, the gas stream or gas flow will pick up the adsorbed liquid from the walls of the transfer means between the injection strokes.

The liquid is especially injected at a high pressure side of the gas stream, especially upstream of a pressure regulation. Downstream of the liquid injection, the gas stream can especially be regulated via a pressure control valve. If the pressure is reduced, a certain amount of liquid can fall out of the gas stream and can be picked up by the gas stream between the injection strokes.

Preferably, a filling level of a storage tank storing the liquid or a liquid volume in the storage tank is determined, depending on the stroke volume and on the stroke interval. Thus, the usage of the liquid can be monitored. Advantageously, a predetermined action is conducted, when e.g. the filling level of the storage tank comes below a predetermined limit of e.g. 25%. For example an alert can be set off as predetermined action, triggering for example a replenishment of the storage tank.

According to a particularly advantageous embodiment of the invention, a gas odourisation is conducted, preferably a natural gas odourisation. Advantageously an odourant is used as the liquid and is preferably injected into the gas stream. By this gas odourisation, leaks or escaping gas can readily be detected without facilities just by the odour.

Preferably, Tetrahydrothiophene (THT) and/or tert-butyl mercaptan (TBM) is used as odourant. Tetrahydrothiophene (THT) is an organosulfur compound with the formula $(CH_2)_4S$. Tert-butyl mercaptan (TBM) is an organosulfur compound with the formula $(CH_3)_3CSH$ and is also known as 2-methylpropane-2-thiol, 2-methyl-2-propanethiol, tert-Butylthiol, and t-BuSH,

Advantageously, the minimum required liquid concentration is determined depending on a predetermined K-value of the odourant and on the lower explosion limit of the gas. Especially a so called minimum required odourant concentration is determined as the minimum required liquid concentration. The K-value is especially an indication of the "strength" of the odourant compound in the gas stream and especially represents the minimal concentration of an odourant in a gas-air mixture which reliably ensures the warning odour level. The K-value is especially given in the unit of volume of mass per volume.

The K-value can especially be predetermined by international standards or safety regulations, particularly by the standard ISO/TR 16922 and/or VDI 3882. Thus, for the injection of the odourant, a minimum required amount of odourant according to given specifications, international standards, or safety regulations, respectively, can be taken into account.

Thus, the minimum required odourant concentration, the liquid injection rate (or odourant injection rate in this case), and the corresponding stroke intervals are determined taking into account international standards. The flowrate of the gas stream and dosing of the odourant injection rate are correlated. It can especially be guaranteed that the required amount of odourant is injected into the gas stream as demanded by given safety regulations. Overdosing and underdosing of the odourant can especially be prevented. Problems of conventional means to inject an odourant into a gas stream (e.g. by pressure bypass systems or a needle valves) can be overcome, as elaborately discussed above.

The K-value lies advantageously in the range between 0.001 mg/m³ and 0.08 mg/m³. Preferably, the K-value lies in the range between 0.05 mg/m³ and 0.08 mg/m³ for Tetrahydrothiophene (THT) as the liquid. According to the standard ISO/TR 16922 the K-value of Tetrahydrothiophene (THT) is especially 0.08 mg/m³ and according to the standard VDI 3882 the corresponding K-value is especially 0.05 mg/m³. Preferably, the K-value for tert-butyl mercaptan (TBM) as the liquid lies in the range between 0.001 mg/m³ and 0.03 mg/m³. The K-value of tert-butyl mercaptan (TBM) is especially 0.03 mg/m³ according to standard ISO/TR 16922 and especially 0.001 mg/m³ according to the standard VDI 3882.

The minimum required liquid concentration is advantageously in the range between 1 mg/m³ and 10 mg/m³. For Tetrahydrothiophene (THT) with a density of 997 mg/ml the minimum required liquid concentration is preferably essentially or equal to 8 mg/m³ or 2.2 ppm, respectively. For tert-butyl mercaptan (TBM) with a density of 800 mg/ml the minimum required liquid concentration is preferably essentially or equal to 3 mg/m³ or 0.8 ppm, respectively.

Advantageously, the flowrate of the gas stream lies in the range between 25 kg/h and 2000 kg/h, especially between 100 kg/h and 1500 kg/h. Conventional methods of injecting a liquid, especially an odourant, into a gas stream are usually designed for gas streams with much larger flowrates. By the method and system according to the invention, liquid or odourant, respectively, can precisely be injected into gas streams with comparatively low flowrates.

The target liquid injection rate advantageously lies in the range between 0.1 ml/h and 20.0 ml/h, particularly in the range between 1.0 ml/h and 18.0 ml/h for Tetrahydrothiophene (THT) as the liquid or particularly in the range between 0.5 ml/h and 9.0 ml/h for tert-butyl mercaptan (TBM) as the liquid.

With a preferred stroke volume of essentially or equal to 0.055 ml, the stroke interval advantageously lies in the range between 1 s and 400 s. The stroke interval preferably lies in the range between 10 s and 170 s for Tetrahydrothiophene (THT) and preferably in the range between 20 s and 360 s for tert-butyl mercaptan (TBM).

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which

FIG. 1     schematically shows a preferred embodiment of a liquid injection system according to the invention, which is adapted to conduct a preferred embodiment of a method according to the invention.

FIG. 2     schematically shows a preferred embodiment of a method according to the invention as a block diagram.

FIG. 3     schematically shows a diagram of a liquid injection rate plotted against a flowrate of a gas stream, which can be determined in the course of a preferred embodiment of a method according to the invention.

FIG. 4 schematically shows a diagram of a stroke interval plotted against a flowrate of a gas stream, which can be determined in the course of a preferred embodiment of a method according to the invention.

Detailed description

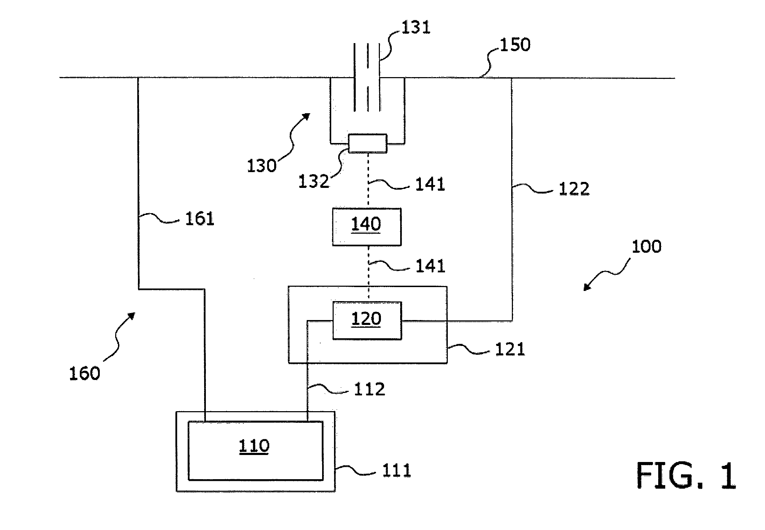

In FIG. 1 a preferred embodiment of a liquid injection system 100 in form of an odourant injection system according to the invention is schematically shown.

A gas stream of natural gas is conducted through transfer means in form of a pipeline 150. The gas stream can for example be conducted through the pipeline in the course of power generation in a power plant. In order to make the odourless and colourless natural gas detectable by an operator by smell without any facilities, a gas odourisation is conducted, i.e. an odour is injected into the gas stream of natural gas inside the pipeline 150.

For this purpose, the odourant injection system 100 is provided. The odourant injection system 100 comprises a storage tank 110 storing a liquid in form of an odourant, particularly Tetrahydrothiophene (THT) or tert-butyl mercaptan (TBM). The storage tank 110 can be arranged inside a skid 111, e.g. a framework.

The storage tank 110 is connected with a pump 120, especially a reciprocating pump. The pump 120 can also be arranged inside a skid 121, e.g. a framework. Storage tank 110 and pump 120 can for example be connected by a hose 112. The pump 120 is connected with the pipeline 150, for example by a hose 122.

A cooling system 160 can be provided in order to cool the storage tank 110 and to prevent cavitation of the odourant inside the storage tank 110. For this purpose, a specific amount of natural gas can be conducted from the pipeline 150 through a pipe 161 to the storage tank 110.

A flowmeter 130, for example an orifice plate flowmeter, is adapted to measure an actual flowrate of the gas stream inside the pipeline 150. The flowmeter 130 especially comprises an orifice plate 131 placed in the gas stream, which constricts the gas stream. By a differential pressure sensor 132 a first pressure upstream the orifice plate 131 and a second pressure downstream the orifice plate 132 is measured. By the pressure difference between the firsts and the second pressure the flowrate of the gas stream inside the pipeline 150 can be determined.

The flowmeter 130 is connected with a control unit 140 and transmits the measured flowrate to the control unit 140. The control unit 140 is especially constructed as a programmable logic controller (PLC). Moreover, the programmable logic controller 140 is adapted to control the pump 120. Programmable logic controller 140, flowmeter 130, and pump 120 can be connected via an appropriate communication system, especially via a bus-system 141, e.g. a fieldbus.

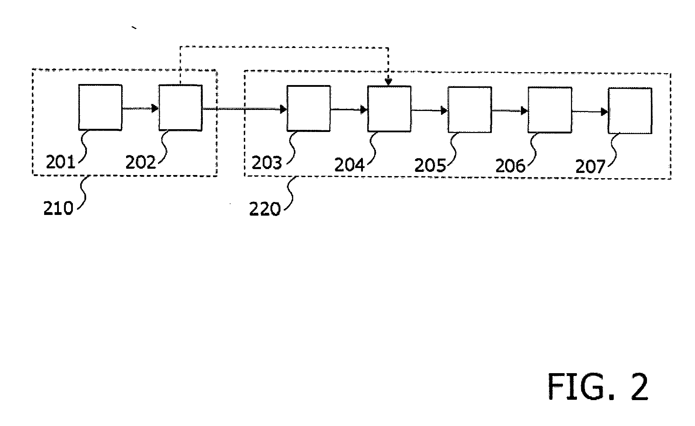

The programmable logic controller 140 is particularly adapted to conduct a preferred embodiment of a method according to the invention, which will be discussed in the following in reference to FIG. 2 to FIG. 4.

FIG. 2 schematically shows a preferred embodiment of a method according to the invention as a block diagram.

In step 201 a minimum required liquid concentration or minimum required odourant concentration $c_n$ is determined dependent on a lower explosion limit (LEL) of the natural gas in the gas stream and dependent on a predetermined K-value of the odourant. The minimum required odourant concentration $c_n$ can for example be determined via the following formula:

$$c_n = \frac{100K}{0.2LEL}$$

Thus, the minimum required odourant concentration $c_n$ describes a minimum amount of odourant in order to detect the presence of gas in air in concentrations below 20% of the lower explosive limit (LEL).

For example for tert-butyl mercaptan (TBM) as odourant a K-value of 0.03 mg/m$^3$ according to standard ISO/TR 16922 can be predetermined. With a molecular weight of 90.188 g/mol and a density of 800 mg/ml of TBM and with a lower explosion limit of 5% for natural gas essentially comprising methane, a minimum required odourant concentration of $c_n = 3\frac{mg}{m^3} = 0.8\,ppm$ can be determined.

For example for Tetrahydrothiophene (THT) as odourant a K-value of 0.08 mg/m$^3$ according to standard ISO/TR 16922 can be predetermined. With a molecular weight of 88.777 g/mol and a density of 997 mg/ml of THT, a minimum required odourant concentration of $c_n = 8\frac{mg}{m^3} = 2.2\,ppm$ can be determined.

In step 202 a theoretical relation between a liquid injection rate or an odourant injection rate, respectively, and a flowrate of the gas stream is determined dependent on the determined minimum required odourant concentration $c_n$. This relation constitutes a specific amount of odourant, which shall be injected into the gas stream in a certain time interval, depending on a specific flowrate of the gas stream.

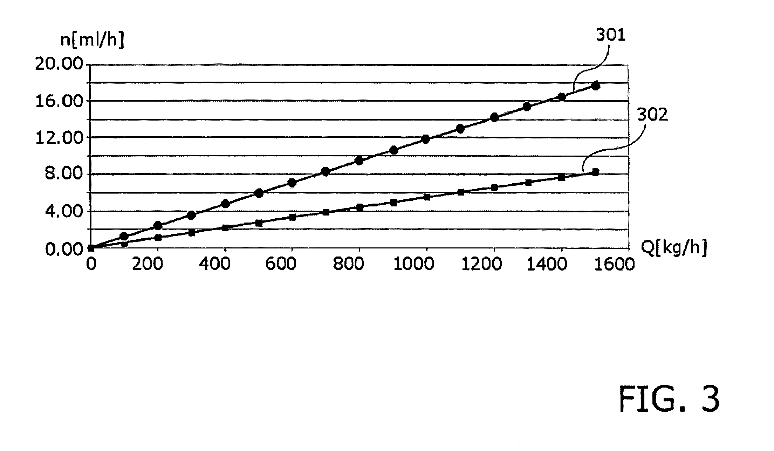

This theoretical relation can be determined as a characteristic curve according to which the odourant is injected into the gas stream. The theoretical relation or said characteristic curve, respectively, is schematically shown in FIG. 3 in the form of a diagram of the liquid odourant rate n plotted against the flowrate Q of the gas stream.

Curve 301 represents odourant injection rates n for Tetrahydrothiophene (THT) and curve 302 represents odourant injection rates n for tert-butyl mercaptan (TBM). As can be seen in FIG. 3, odourant injection rates n for flowrates Q in the range between 0 kg/h and 1500 kg/h are determined.

The determined odourant injection rates n lie in the range between 0 ml/h and 18.0 ml/h for Tetrahydrothiophene (THT) and in the range between 0 ml/h and 9.0 ml/h for tert-butyl mercaptan (TBM).

Steps 201 and 202 can be conducted during a first phase 210, especially during a construction and configuration phase of the liquid injection system 100. During this first phase 210, the flowmeter 130 can be mounted at the pipeline 150. Moreover, the programmable logic controller 140 is programmed and configured during this first phase, in the course of which the determined required liquid concentration $c_n$ and the theoretical relation are saved in a memory of the programmable logic controller 140.

During a second phase 220, especially during an operation phase of the liquid injection system 100, the liquid injection system 100 is brought into service and is being operated. During this second phase, the actual flowrate of the gas stream inside the pipeline 150 is measured by the flowmeter 130 in step 203.

In step 204 a target liquid injection rate is determined by use of the theoretical relation, which was determined in step 202, dependent on the actual flowrate, measured in step 203. For example, for a measured flowrate Q of 1500 kg/h a target odourant injection rate of 17.71 ml/h can be determined for Tetrahydrothiophene (THT) or a target odourant injection rate of 8.28 ml/h can be determined for tert-butyl mercaptan (TBM).

In step 205 a stroke interval between liquid injection strokes or odourant injection strokes, respectively, is determined. During these odourant injection strokes, a certain stroke volume of the odourant is injected into the pipeline 150 by the pump 120. This stroke volume can be predetermined by the pump 120. For example, the stroke volume can be 0.055 ml. The stroke interval is determined dependent on the target odourant injection rate, which was determined in step 204, and on the stroke volume.

For example, for the measured flowrate Q of 1500 kg/h and the determined target odourant injection rate of 17.71 ml/h for Tetrahydrothiophene (THT) a stroke interval of 11.183 s can be determined. For the measured flowrate Q of 1500 kg/h and the determined target odourant injection rate of 8.28 ml/h for tert-butyl mercaptan (TBM) a stroke interval of 23.945 s can be determined.

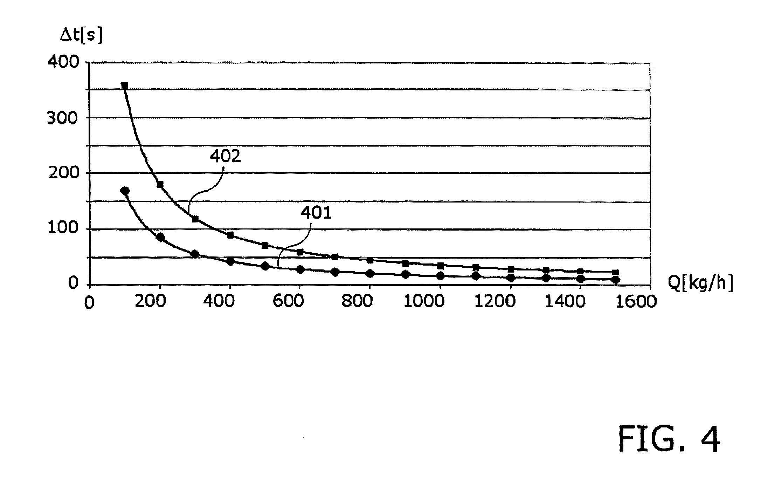

In FIG. 4 a diagram of the stroke intervals Δt plotted against the flowrate Q of the gas stream is schematically shown. Curve 401 represents stroke intervals Δt for Tetrahydrothiophene (THT) and curve 402 represents stroke intervals Δt for tert-butyl mercaptan (TBM). The stroke interval Δt for Tetrahydrothiophene (THT) can lie in the range between 10 s and 170 s and in the range between 20 s and 360 s for tert-butyl mercaptan (TBM).

In step 206 the odourant is injected into the pipeline 150 by pump 120 during the odourant injection strokes with the stroke volume of 0.055 ml of each odourant injection stroke and with the determined stroke interval Δt between the odourant injection strokes.

With the determined stroke interval and the stroke volume of the pump, a filling level of the storage tank 110 can be determined and monitored according to step 207. When the filling level of the storage tank 110 comes below a predetermined limit, e.g. 25%, an alert can be set off as a predetermined action.

**Reference list**

| | |
|---|---|
| 100 | liquid injection system, odourant injection system |
| 110 | storage tank |
| 111 | skid, framework |
| 112 | hose |
| 120 | pump, reciprocating pump |
| 121 | skid, framework |
| 122 | hose |
| 130 | flowmeter, orifice plate flowmeter |
| 131 | orifice plate |
| 132 | differential pressure sensor |
| 140 | control unit, programmable logic controller |
| 141 | bus, fieldbus |
| 150 | transfer means, pipeline |
| 160 | cooling system |
| 161 | pipe |
| 201 to 206 | steps of the method |
| 210 | first phase, construction and configuration phase |
| 220 | second phase, operation phase |
| 301 | curve for Tetrahydrothiophene (THT) |
| 302 | curve tert-butyl mercaptan (TBM) |
| 401 | curve for Tetrahydrothiophene (THT) |
| 402 | curve tert-butyl mercaptan (TBM). |

**Claims**

1. Method of injecting a liquid into a gas stream, especially a gas stream of natural gas, comprising the steps of:

   - determining a minimum required liquid concentration dependent on a lower explosion limit of the gas in the gas stream (201),
   - determining a relation (301, 302) between a liquid injection rate and a flowrate of the gas stream dependent on the determined minimum required liquid concentration (202),
- measuring an actual flowrate of the gas stream (203),
- determining a target liquid injection rate by use of the determined relation (301, 302) dependent on the measured actual flowrate (204),
- injecting the liquid into the gas stream according to the determined target liquid injection rate (206).

2. The method according to claim 1, further comprising the step of:

    - determining a stroke interval between liquid injection strokes, in the course of which the liquid is injected into the gas stream, dependent on the determined target liquid injection rate and on a stroke volume of liquid being injected into the gas stream in the course of the liquid injection strokes (205).

3. The method according to claim 2, further comprising the step of:

    - determining a filling level of or a liquid volume in a storage tank (110) storing the liquid, depending on the stroke volume and on the stroke interval (207).

4. The method according to claim 3, further comprising the step of:

    - conducting a predetermined action when the filling level of or the liquid volume in the storage tank (110) comes below a predetermined limit (207).

5. The method according to any one of the previous claims, wherein an odourant is used as the liquid, especially Tetrahydrothiophene and/or tert-butyl mercaptan.

6. The method according to claim 5, wherein the minimum required liquid concentration is determined depending on a predetermined K-value of the odourant and on the lower explosion limit of the gas (201).

7. The method according to claim 6, wherein the K-value is in the range between 0.001 $mg/m^3$ and 0.08 $mg/m^3$, especially in the range between 0.05 $mg/m^3$ and 0.08 $mg/m^3$ for Tetrahydrothiophene as the liquid or especially in the range between 0.001 $mg/m^3$ and 0.03 $mg/m^3$ for tert-butyl mercaptan as the liquid.

8. The method according to any one of the preceding claims, wherein the minimum required liquid concentration is in the range between 1 $mg/m^3$ and 10 $mg/m^3$, especially essentially or equal to 8 $mg/m^3$

for Tetrahydrothiophene as the liquid or especially essentially or equal to 3 $mg/m^3$ for tert-butyl mercaptan as the liquid.

9. The method according to any one of the preceding claims, wherein the flowrate of the gas stream is in the range between 25 kg/h and 2000 kg/h, especially between 100 kg/h and 1500 kg/h.

10. The method according to any one of the preceding claims, wherein the target liquid injection rate is in the range between 0.1 ml/h and 20.0 ml/h, especially in the range between 1.0 ml/h and 18.0 ml/h for Tetrahydrothiophene as the liquid or especially in the range between 0.5 ml/h and 9.0 ml/h for tert-butyl mercaptan as the liquid.

11. The method according to any one of the preceding claims if dependent upon claim 2, wherein the stroke volume is in the range between 0.05 ml and 0.1 ml, especially essentially or equal to 0.055 ml.

12. The method according to any one of the preceding claims if dependent upon claim 2, wherein the stroke interval is in the range between 1 s and 400 s, especially in the range between 10 s and 170 s for Tetrahydrothiophene as the liquid and in the range between 20 s and 360 s for tert-butyl mercaptan as the liquid.

13. The method according to any one of the preceding claims, wherein natural gas, methane, butane, propane, hydrogen and/or acetylene or mixtures thereof are used as the gas.

14. A liquid injection system (100) adapted to inject a liquid into a gas stream, especially a gas stream of natural gas, comprising:

    - a flowmeter (130) adapted to measure an actual flowrate of the gas stream,
    - a pump (120) adapted to inject the liquid into the gas stream, and
    - a control unit (140) adapted to conduct a method according to any one of the preceding claims.

# FIG. 1

FIG. 2

FIG. 3

FIG. 4

EP 3 133 142 A1

Europäisches
Patentamt
European
Patent Office
Office européen
des brevets

# EUROPEAN SEARCH REPORT

Application Number

EP 15 00 2445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2001/047621 A1 (ARNOLD JOE FRANK [US]) 6 December 2001 (2001-12-06) * paragraphs [0004], [0006], [0008], [0010], [0016], [0023] - [0027], [0033] - [0043] * | 1-14 | INV. C10L3/00 G05D11/13 |
| Y | WO 2015/050509 A1 (AYGAZ ANONIM SIRKETI [TR]) 9 April 2015 (2015-04-09) * page 3, line 5 - line 16 * | 1-14 | |
| Y | US 3 545 949 A (OISTER WILLIAM HARRY) 8 December 1970 (1970-12-08) * column 1, line 19 - column 2, line 41 * * column 2, line 60 - line 68 * * figure; example I; table I * | 1-14 | |

TECHNICAL FIELDS
SEARCHED      (IPC)

C10L
G05D

The present search report has been drawn up for all claims

| Place of search | Date of completion of the search | Examiner |
|---|---|---|
| Munich | 22 January 2016 | Keipert, Olaf |

EPO FORM 1503 03.82 (P04C01)

## ANNEX TO THE EUROPEAN SEARCH REPORT
## ON EUROPEAN PATENT APPLICATION NO.

EP 15 00 2445

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2016

| Patent document cited in search report | | Publication date | Patent family member(s) | Publication date |
|---|---|---|---|---|
| US 2001047621 | A1 | 06-12-2001 | NONE | |
| WO 2015050509 | A1 | 09-04-2015 | NONE | |
| US 3545949 | A | 08-12-1970 | NONE | |

EPO FORM P0459

For more details about this annex : see Official Journal of the European Patent Office, No. 12/82